# EUROPEAN PATENT SPECIFICATION

(11) **EP 1 176 349 B1**
(45) Date of publication and mention of the grant of the patent: **02.02.2005**
(21) Application number: 01116910.9
(22) Date of filing: 11.07.2001
(51) Int. Cl.: F16L 3/04, F16L 3/10

(54) **Device for anchoring pipes and ducts**
Vorrichtung zum Verankern von Rohren und Kanaelen
Dispositif d'ancrage de tuyaux et conduits

(30) Priority: 26.07.2000 IT MI000443 U
(43) Date of publication of application: 30.01.2002
(73) Proprietor: GIA S.r.l., I-28069 Trecate (Novara) (IT)
(72) Inventor: Guaglio, Antonio, 28069 Trecate (Novara) (IT)
(74) Representative: Cicogna, Franco

(56) References cited:
- EP-A- 0 377 236
- FR-A- 530 158
- FR-A- 2 149 993
- GB-A- 177 271

## Description

### BACKGROUND OF THE INVENTION

The present invention relates to an improved device for anchoring pipes and/or ducts in general.

The device comprises, in particular, a quick clamping collar, specifically designed for optimizing the pipe or duct locking stability as well as the assembling time of said pipes or ducts in civil and industrial systems.

As is known, a very important problem yet to be satisfactorily solved in piping civil and industrial systems is that of quickly assembling the related pipes or ducts.

Moreover, it would be desirable to provide a pipe anchoring device allowing the pipes or ducts to be simply assembled and firmly locked in masonry constructions.

Prior devices for clamping pipes and ducts conventionally comprise metal bands or clamps, including two annular discrete circular sectors, defining an open annular body, called "collar".

The document FR-A-214993 discloses a pipe clamping device having two semicircular half-collars.

One of the above mentioned collar sectors provides a seat for housing therein the pipe or duct.

Said seat providing sector comprises, on a rear portion thereof, an element for allowing said sector to be clamped to a masonry construction, providing a firm binding region of the system.

The second circular sector, in turn, is brought to an adjoining relationship with the first sector, thereby holding therebetween the pipe cylindric body, engaged in the annular hollow defined by the two collar sectors.

Both said collar sectors are provided, at their end portions, with flat and elongated parts, conventionally called "fins", which outward radially extend and are provided, at their central region, with a respective throughgoing hole.

Said fins are arranged in a mutual facing relationship, and the throughgoing holes formed therein allows said fins to be mutually coupled by a screw type of clamping element.

Thus, it is possible to "close" the collar and, accordingly, clamp the first collar sector to the pipe to be anchored and consequently to the second collar sector, thereby providing a single rigid body.

However, the above mentioned approaches are affected by several drawbacks, occurring both before and after the assembling thereof.

In particular, by using the mentioned collars, the anchoring time of said pipe is very long.

Moreover, it is necessary to leave a gap between a pipe and an adjoining pipe, because of the provision of the projecting fins.

Moreover, during the assembling operation, it is very difficult to simultaneously connect the two fins, and this specially during the clamping starting step.

Actually, during this operation, the operator must perform a plurality of very different operations, comprising the unscrewing of the two screws, freeing the fist collar sector while simultaneously opening the collar, locating the pipe in the available seat therefor, overlapping again the second collar sector on the first, performing a first loose clamping of one of the two clamping screws, providing the same clamping on the other screw, and continuing to alternately clamping both the screws up to the end or limit positions thereof.

In this connection it should be pointed out that it is not possible to provide a precise parallel adjoining relationship of two or more pipes, by pairs, because of the side projections of the fins.

### SUMMARY OF THE INVENTION

Accordingly, the aim of the present invention is to provide civil and industrial system assembling operators with an improved anchoring device for anchoring pipes and/or ducts in general, which includes a quick clamping collar specifically designed for optimizing and facilitating the pipe anchoring operations, while greatly reducing the assembling time.

Within the scope of the above mentioned aim, a main object of the present invention is to provide a firm anchoring of the pipes to the element constituting the static binding region.

A further object of the present invention is to simplify and reduce the cost of the anchoring device, by requiring a single mold to make the two like half-collars, instead of providing two molds as in the case of the conventional two half collars.

Yet another object of the present invention is to speed up and facilitate the operations for assembling the system pipes and/or ducts.

According to one aspect of the present invention, the above mentioned aim and objects, as well as yet other objects, which will become more apparent hereinafter, are achieved by an improved anchoring device for anchoring pipes and/or ducts in general, characterized in that said anchoring device comprises a bottom half-collar and a top half-collar, said bottom and half-collars being identical to one another and made of a metal or plastics material, and having end portions provided with two prismatic fins, extending the semicircular construction of each half collar and including, on a side thereof, rectangular cross-section grooves, so made as to form housing seats which, as said half-collars are brought to an opposite adjoining relationship, firmly engage one another and by a screw arranged at one end of a half-collar which screw, as it is screwed on, simultaneously locks said two half-collars and pipe.

### BRIEF DESCRIPTION OF THE DRAWINGS

Further characteristics and advantages of the present invention will become more apparent hereinafter from the following detailed disclosure of a preferred, though not exclusive, embodiment of an anchoring device for anchoring pipes and ducts in general, including a collar specifically designed for optimizing the locking of said pipes, while reducing their assembling times in civil and industrial systems, said device being illustrated, by way of an indicative, but not limitative, example in the figures of the accompanying drawings, where:

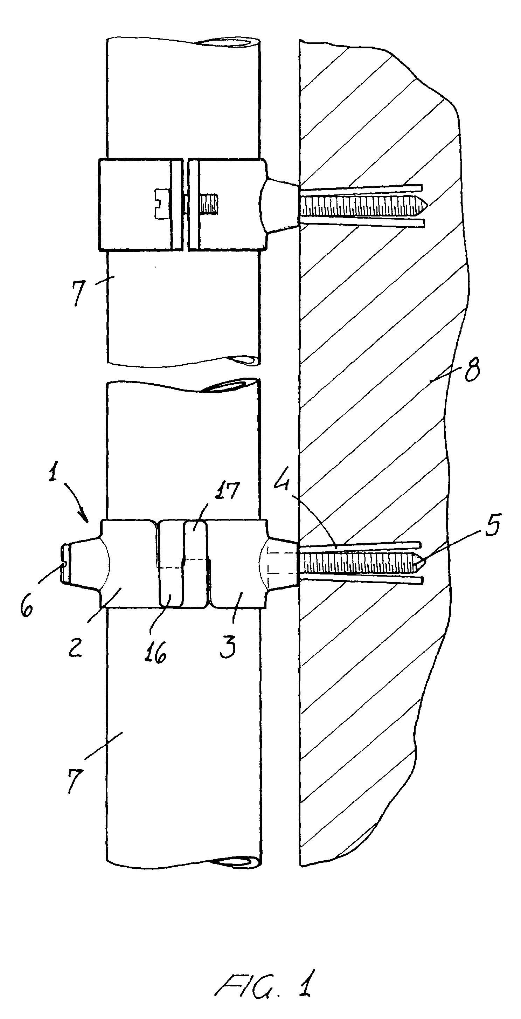

Figure 1 is a side view illustrating a conventional device for locking pipes or ducts, at the top thereof, and further illustrating, at the bottom thereof, the improved anchoring device according to the present invention;
Figure 2 is a side perspective view illustrating the anchoring device according to the invention, without the pipe;

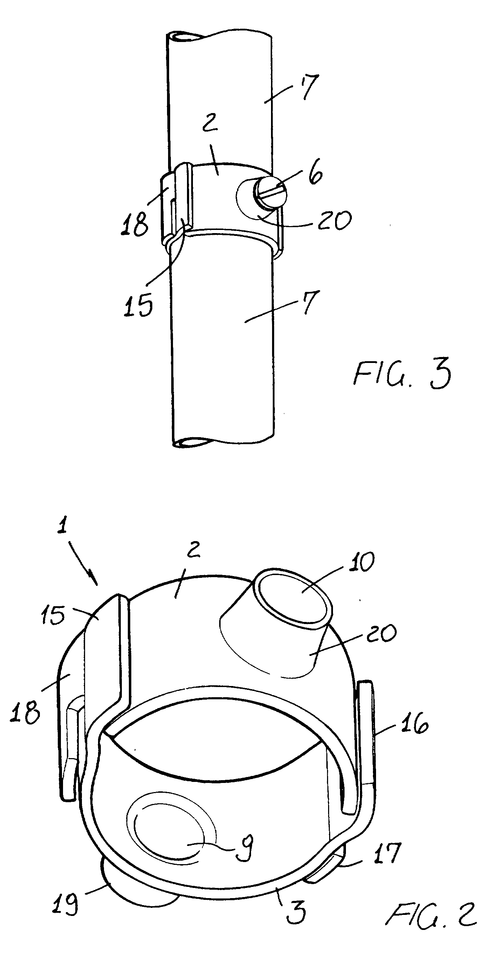

Figure 3 is a further side perspective view illustrating the anchoring device according to the present invention, applied to a pipe or duct;

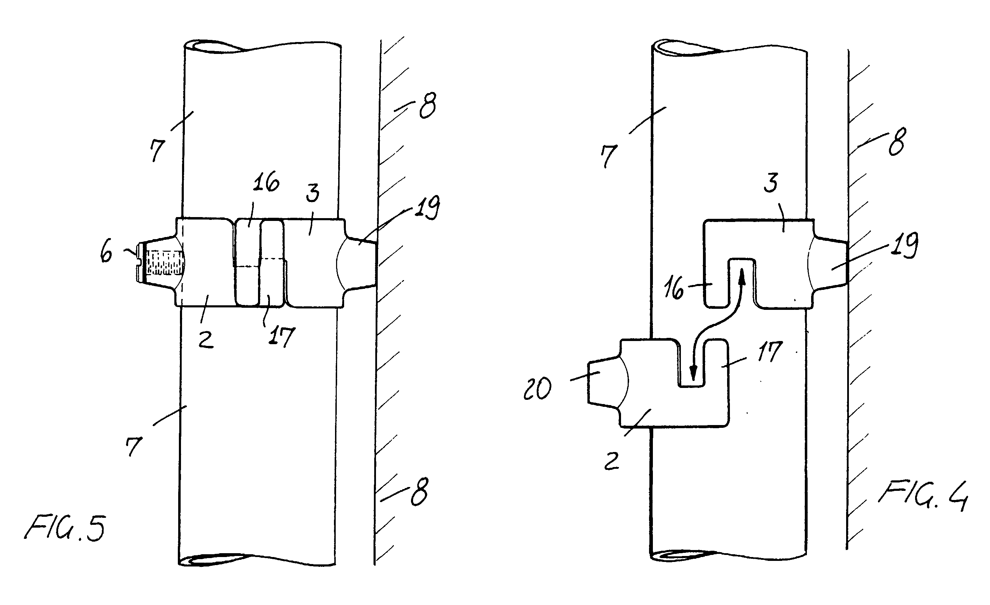

Figure 4 is a side view illustrating the anchoring device according to the invention applied to a wall the application being made in an operating step preceding the two half-collar assembling step;
Figure 5 is a side view illustrating the anchoring device according to the invention, in an assembled condition, and clearly shows the contact points thereof, as well as the effort application points inside the fixed joint provided by the two half-collars;

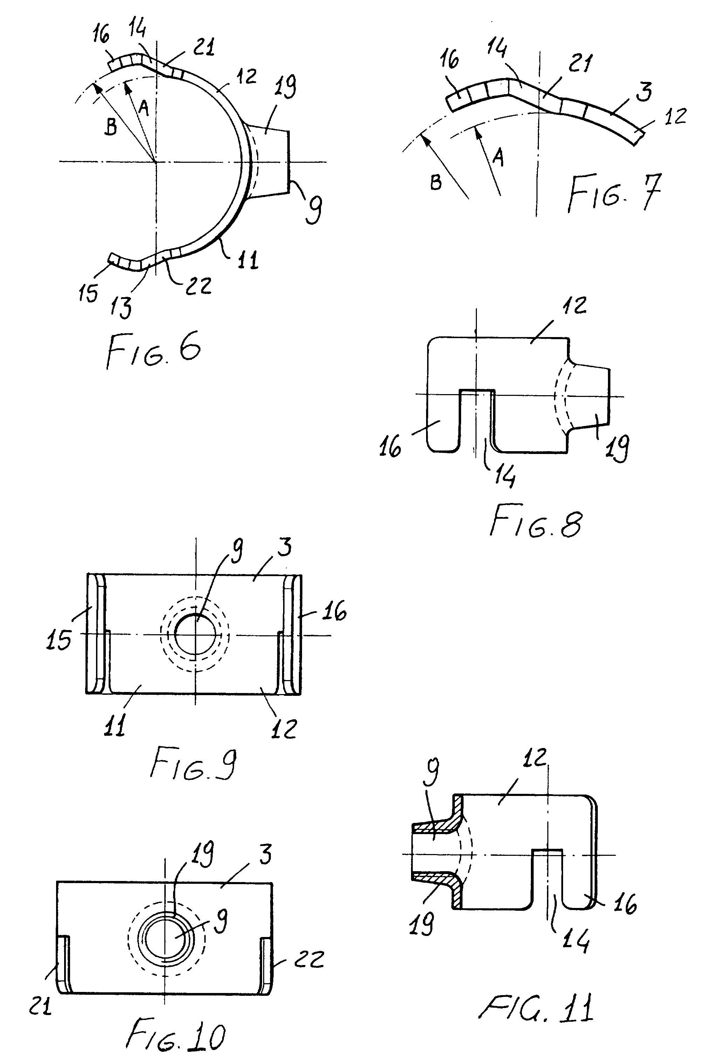

Figures 6, 7, 8, 9, 10 and 11 show corresponding views, taken from different viewing angles, clearly illustrating the main details of the elements constituting the anchoring device or collar according to the invention.

### DESCRIPTION OF THE PREFERRED EMBODIMENTS

With reference to the number references of the above mentioned figures, the improved anchoring device for anchoring pipes and/or ducts in general, according to the present invention, and which has been generally indicated by the reference number 1, comprises a top half-collar 2 and a like bottom half-collar 3, said half-collars being preferably made of a metal or plastics material.

The anchoring device further comprises a plug 4 and a screw 5 for anchoring said device to a static binding element 8, said plug and screw being housed in a perforated recess 9.

The anchoring device according to the present invention comprises moreover a screw clamping element 6, engaged in said recess 10, which can have a shape either equal or different to the shape of the perforated recess 9 assuring the locking of the pipe or duct.

The half-collar, as molded, will assume a given bending radius, which is incrementally changed at the two end portions thereof, where said half-collar is provided with the two fins 11 and 12, by linearizing two first lengths 21 and 22 operating as a fitting elements between the two bending radii A and B.

As shown in figure 6, it should be apparent that the radial variation is equal to or greater than the thickness of the sheet element and that it allows the fins to be abutted one against the other as the seats or recesses 13 and 14 are overlapped on the linearized lengths 21 and 22 of the opposite half-collar.

The tongue elements 17 and 18 are like the tongue elements 15 and 16 of the half-collar 3.

As shown, the recesses 9 and 10 are arranged at the top of the respective half-collar and outward project by a frustum of cone shaped body 19 and 20 having any suitable length and diameter and thread.

The above mentioned frustum of cone shaped bodies can be replaced by other bodies provided with outer threads and fixed to the half-collars.

Said bodies, moreover, are provided with respective inner threads, having any suitable thread pitch.

The tongue elements 15 and 16 are beveled at their corners, with a suitable beveling angle, which beveled arrangement is also provided at the inlet corners of the grooves or seats 13 and 14.

All the above mentioned machining operations will provide an improved assembling and coupling.

As the pipe 7 is introduced into the half-collar 3, as preliminarily fixed by the anchoring elements 4 and 5 to the static binding framework 8, the operator will lock it by a single movement from the bottom to the top or vice-versa, depending on the position of the half-collar 3, in this operation the seats or recesses 13 and 14 overlapping on the linear lengths 21, 22 of the half-collar 2.

Then, the operator will actuated the clamping screws 6 for engaging it with the thread of the recess 10 and, by urging the pipe, the operator will put under tension the half-collar 2 with respect to the half-collar 3 by providing, in the abutment between the tongue elements 16 and 17 and 15 and 18, an effort or force clamping the collar to the pipe 7.

By operating at a single point, it is possible to distribute the locking force through the overall remaining portion of the collar in a homogeneous manner, with maximum peaks at the fixed joints and, of course, on the clamping screw 6.

From the above disclosure it should be apparent that the invention fully achieves the intended aim and objects.

In particular, the fact is to be pointed out that an anchoring device has been provided which is very practical and functional, allowing to simply and quickly anchoring or locking pipes and ducts, while providing a very firm connection of the end portions of two like half-collars, and a perfect clamping, by operating a single clamping screw arranged at a central position with respect to the anchoring device and pipe to be locked.

The invention, as disclosed, is susceptible to several modifications and variations, all of which will come within the scope of the invention.

In practicing the invention, the used materials, as well as the contingent size and shapes, can be any, depending on requirements.

## Claims

1. An improved anchoring device (1) for anchoring a pipe (7) comprising a bottom semicircular half-collar (2) and a top semicircular half-collar (3) of a metal or plastics material having end portions provided with two end tongues (15, 16; 17, 18), extending the semicircular construction of each half-collar (2, 3) and including, on a side thereof, rectangular cross-section grooves forming seats (13, 14) which, as said half-collars (2, 3) are brought to an opposite adjoining relationship, firmly engage one another and by a screw (6) arranged at one end of a half-collar which screw, as it is screwed on, simultaneously locks said two half-collars (2, 3) and a pipe (7), whereby said tongues are beveled at corner portions thereof, that said seats (13, 14) are also beveled at inlet corners thereof **characterized in that** said bottom (2) and top (3) half-collars are identical to one another, and that each said half-collar has a first bending radius (A) provided on a central portion of said half-collar which first bending radius is smaller than a second bending radius (B) provided at portions of each said half-collar defining said tongues (15, 16; 17, 18).

2. An anchoring device according to claim 1, **characterized in that** said identical half-collars are made by molding a metal sheet element or a plastics material sheet element.

3. An anchoring device according to claims 1 and 2, **characterized in that** said half-collars are provided, at an apex region thereof, with inside threaded recesses (9, 10) extending outward with a frustum of cone shaped body (19, 20) and engaging with a clamping screw (6).

4. An anchoring device according to claim 1, **characterized in that** the collar portions having said first and second different bending radii (A, B) are coupled by linear lengths (21, 22).

5. An anchoring device according to claim 1, **characterized in that** the difference of said first and second bending radii is equal to or greater than the thickness of the sheet element forming each said collar (2, 3).

## Patentansprüche

1. Verbesserte Verankerungsvorrichtung (1) zum Verankern eines Rohres (7), umfassend einen unteren halbkreisförmigen Halbring (2) und einen oberen halbkreisförmigen Halbring (3) aus einem Metall- oder Kunststoffmaterial, deren Endabschnitte mit zwei Endzungen (15, 16; 17, 18) versehen sind, welche die halbkreisförmige Konstruktion jedes Halbringes (2, 3) fortsetzen und auf einer Seite Nuten mit rechteckigem Querschnitt enthalten, die Sitze (13, 14) bilden, welche, wenn die Halbringe (2, 3) in eine gegenüberliegend-aneinandergrenzende Beziehung gebracht werden, einander fest in Eingriff nehmen, und durch eine Schraube (6), die an einem Ende eines Halbringes angeordnet ist, wobei diese Schraube beim Einschrauben gleichzeitig die beiden Halbringe (2, 3) und ein Rohr (7) festklemmt, wobei die Zungen an ihren Eckabschnitten abgeschrägt sind und wobei die Sitze (13, 14) an ihren Einschubecken ebenfalls abgeschrägt sind, **dadurch gekennzeichnet, dass** der untere (2) und der obere (3) Halbring identisch sind und dass jeder Halbring an einem Mittelabschnitt einen ersten Biegeradius (A) aufweist, der kleiner ist als ein zweiter Biegeradius (B) an den Abschnitten eines jeden Halbrings, welche die Zungen (15, 16; 17, 18) definieren.

2. Verankerungsvorrichtung nach Anspruch 1, **dadurch gekennzeichnet, dass** die identischen Halbringe durch Formen eines Flachmaterialelements aus Metall oder Kunststoff hergestellt werden.

3. Verankerungsvorrichtung nach Anspruch 1 und 2, **dadurch gekennzeichnet, dass** an einer Scheitelregionen der Halbringe Ausnehmungen (9, 10) mit Innengewinde angeordnet sind, die sich mit einem kegelstumpfförmigen Körper (19, 20) nach außen erstrecken und eine Klemmschraube (6) in Eingriff nehmen.

4. Verankerungsvorrichtung nach Anspruch 1, **dadurch gekennzeichnet, dass** die Ringabschnitte mit den ersten und zweiten unterschiedlichen Biegeradien (A, B) durch lineare Abschnitte (21, 22) miteinander verkoppelt werden.

5. Verankerungsvorrichtung nach Anspruch 1, **dadurch gekennzeichnet, dass** die Differenz zwischen dem ersten und dem zweiten Biegeradius mindestens so groß ist wie die Dicke des Flachmaterialelements, aus denen die Ringe (2, 3) hergestellt sind.

## Revendications

1. Un dispositif d'ancrage amélioré (1) pour ancrer un tuyau (7), comprenant un demi-collier semi-circulaire inférieur (2) et un demi-collier semi-circulaire supérieur (3) en métal ou matière plastique ayant des parties d'extrémité munies de deux languettes d'extrémité (15, 16 ; 17, 18), étendant la structure semi-circulaire de chaque demi-collier (2, 3) et incluant, sur un de leurs côtés, des rainures à section transversale rectangulaire formant des assises (13, 14) qui, lorsque lesdits demi-colliers (2, 3) sont amenés en relation de contiguïté opposée, viennent en prise fermement l'une avec l'autre et au moyen d'une vis (6) disposée à une extrémité d'un demi-collier, laquelle vis, lorsqu'elle est vissée, bloque simultanément lesdits deux demi-colliers (2, 3) et un tuyau (7), lesdites languettes étant biseautées au niveau de parties de coin de ces languettes, et lesdites assises (13, 14) étant aussi biseautées au niveau de coins d'introduction de ces assises, **caractérisé en ce que** lesdits demi-colliers inférieur (2) et supérieur (3) sont identiques l'un à l'autre et **en ce que** chacun desdits demi-colliers a un premier rayon de courbure (A) prévu sur une partie centrale dudit demi-collier, lequel premier rayon de courbure est inférieur à un second rayon de courbure (B) prévu au niveau de parties de chacun desdits demi-colliers définissant lesdites languettes (15, 16 ; 17, 18).

2. Un dispositif d'ancrage selon la revendication 1, **caractérisé en ce que** lesdits demi-colliers identiques sont réalisés en moulant un élément formant feuille en métal ou un élément formant feuille en matière plastique.

3. Un dispositif d'ancrage selon les revendications 1 et 2, **caractérisé en ce que** lesdits demi-colliers sont prévus, au niveau d'une zone de sommet de ces demi-colliers, avec des évidements filetés à l'intérieur (9, 10) s'étendant vers l'extérieur avec un corps en forme de tronc de cône (19, 20) et venant en prise avec une vis de serrage (6).

4. Un dispositif d'ancrage selon la revendication 1, **caractérisé en ce que** les parties de collier ayant lesdits premier et second rayons différents de courbure (A, B) sont raccordées par des longueurs rectilignes (21, 22).

5. Un dispositif d'ancrage selon la revendication 1, **caractérisé en ce que** la différence desdits premier et second rayons de courbure est supérieure ou égale à l'épaisseur de l'élément formant feuille constituant chacun desdits colliers (2, 3).
